# EUROPÄISCHE PATENTSCHRIFT

(11) **EP 0 487 521 B1**
(45) Veröffentlichungstag und Bekanntmachung des Hinweises auf die Patenterteilung: **19.05.1993**
(21) Anmeldenummer: 90902763.3
(22) Anmeldetag: 16.02.1990
(51) Int. Cl.: B41J 2/505, G06K 15/10

(54) **VERFAHREN ZUM ANSTEUERN VON DRUCKELEMENTEN**
PROCESS FOR DRIVING PRINTING ELEMENTS
PROCEDE POUR LA COMMANDE D'ELEMENTS D'IMPRESSION

(30) Priorität: 04.08.1989 DE 3925913
(43) Veröffentlichungstag der Anmeldung: 03.06.1992
(73) Patentinhaber: SIEMENS AKTIENGESELLSCHAFT, 80333 München (DE)
(72) Erfinder: LEHMANN, Manfred, D-8039 Puchheim (DE); SCHERDEL, Stefan, D-8000 München 70 (DE)
(74) Vertreter: Meissner, Peter E., Dipl.-Ing.
(86) Internationale Anmeldenummer: DE9000106
(87) Internationale Veröffentlichungsnummer: WO9101888

(56) Entgegenhaltungen:
- EP-A- 0 013 296
- EP-A- 0 160 318
- IBM TECHNICAL DISCLOSURE BULLETIN vol. 27, No. 4b, September 1984, NEW YORK US, page 2504 Kitamura: "Draft font generation"
- PATENT ABSTRACTS OF JAPAN vol. 12, No. 67 (M-673) (2914) 2 March 1988; JP A 62 212 164

## Beschreibung

Die Erfindung betrifft ein Verfahren zum Ansteuern von Druckelementen, die als Tintentröpfchen ausstoßende Tintendruckeinrichtungen ausgebildet sind, welche in mehreren Reihen mit jeweils einer Mehrzahl von Druckelementen angeordnet sind und die zur Darstellung eines Zeichens an bestimmten Rasterpunkten innerhalb eines in Matrixform ausgebildeten Rasters Punkte erzeugen, wobei die Erzeugung der Punkte innerhalb der Matrix spaltenweise parallel zueinander erfolgt und wobei bei der Darstellung bestimmter Zeichen und Zeichengruppen eine Ausdünnung der notwendigen Rasterpunkte erfolgt, indem in jeder Spalte des Rasters jeder zweite druckbare Rasterpunkt unterdrückt wird und wobei die unterdrückten Rasterpunkte in der jeweils benachbarten Spalte um einen Rasterpunkt gegeneinander verschoben sind.

Vorgenannte Druckeinrichtungen sind beispielsweise in Tintendruckeinrichtungen vorgesehen (DE-OS 1 941 680), wobei viele Druckelemente Zeichen mit hoher Druckgeschwindigkeit auf einen Aufzeichnungsträger abdrucken. Diese Druckelemente sind beispielsweise als Tintendruckelemente ausgebildet und in Spalten und Reihen angeordnet, so daß sie ein Raster bilden. Ist ein Zeichen abzudrucken, so werden die zum Bilden dieses Zeichens notwendigen Druckelemente angesteuert, so daß in dem der Zeichenbildung zugrundegelegten Raster die entsprechenden Rasterpunkte eingefärbt werden.

Bei bestimmten Zeichendarstellungen (z.B. Near-Letter-Quality oder bei größeren Zeichenflächen zur Reduzierung der Tintenmenge) ist eine sog. Rasterausdünnung erwünscht, indem man z.B. schachbrettartig jeden zweiten druckbaren Punkt innerhalb des Rasters in jeder Spalte unterdrückt und wobei in jeder folgenden Spalte der unterdrückte Punkt um eine Zeile verschoben ist. Dabei kann es vorkommen, daß dünne Linien zerfranst erscheinen oder je nach Neigungswinkel auch verschwinden.

Um keine Informationen zu verlieren, wurde im Near-Letter-Quality-Verfahren in jeder Spalte des Rasters immer der erste zur Bildung des Zeichens vorkommende Punkt gedruckt und danach erst die Rasterausdünnung nach dem Schachbrettschema vorgenommen. Dabei kann aber eine störende Strukturierung von flächenhaften Darstellungen erfolgen, wenn die Ausgangslinie geneigt oder gekrümmt ist.

Die Aufgabe des erfindungsgemäßen Verfahrens soll nun darin bestehen, den vorgenannten Nachteil zu vermeiden und einen Informationsverlust zu vermeiden.

Dies wird dadurch erreicht, daß die Spalten des Rasters immer paarweise nebeneinanderliegend betrachtet werden und daß vor der Ausdünnung der Rasterpunkte des Rasters einem ursprünglich zur Bildung des Zeichens vorgesehenen Rasterpunkt je nach der Position dieses Rasterpunktes innerhalb des betrachteten Paares zusätzlich ein Rasterpunkt in derselben Zeile vorgesetzt oder nachgesetzt wird, falls noch nicht beide Rasterpunkte eines derartigen Spaltenpaares belegt sind, so daß beide zu einem Spaltenpaar gehörende Rasterpunkte in einer Zeile belegt sind, und daß erst dann die genannte Ausdünnung vorgenommen wird.

Hieraus ergibt sich der Vorteil, daß nach dem schachbrettartig vorgenommenen Ausdünnungsverfahren der abzudruckenden Rasterpunkte kein Verlust wesentlicher Zeichenteile eintritt und daß insbesondere auch mit einer Neigung von 45° behaftete Zeichenteile aufgezeichnet werden.

Das Verfahren wird anhand von drei Figuren näher erläutert.

Figur 1 zeigt ein aus den einzelnen Rasterpunkten bildbares Zeichen in nicht ausgedünnter Form mit den Spalten a1, b1 bis a5, b5 und den Zeilen 1 bis 7, wobei die runden Kreise die Rasterpunkte darstellen.

Figur 2 zeigt das gleiche Zeichen wie in Figur 1, jedoch ausgedünnt nach dem schachbrettartigen Verfahren mit den als Kreise gezeichneten restlichen Rasterpunkten.

Figur 3 zeigt wiederum das gleiche Zeichen, jedoch in Figurteil a mit der dem erfindungsgemäßen Verfahren entsprechenden zusätzlichen Rasterpunktbelegung in einer entsprechenden Steuereinheit vor der Ausdünnung. Dabei sind die zusätzlichen Rasterpunkte quadratisch gezeichnet. Figurteil b zeigt das gleiche Zeichen nach einer Ausdünnung entsprechend dem bekannten schachbrettartigen Verfahren. Dabei sind die ursprünglichen Rasterpunkte als Kreis und die aus den zusätzlichen Rasterpunkten erzeugten Punkte quadratisch gezeichnet.

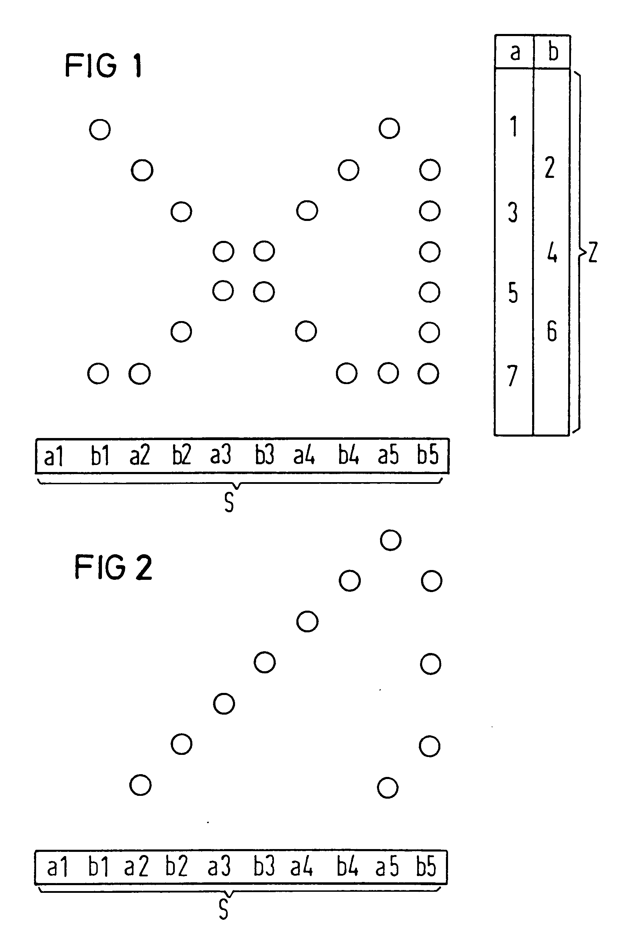

Wie aus den Figuren 1 und 2 zu entnehmen ist, fallen bei der Ausbildung eines Zeichens vor allem bei bestimmten Schräglagen von Zeichenteilen bei einer Rasterausdünnung nach dem bekannten Verfahren unter Umständen soviel wesentliche Rasterpunkte aus, daß das Zeichen als solches nicht mehr eindeutig erkennbar ist.

In Spalte b1 wird beispielsweise in Zeile 1,3,5 und 7 gar kein Rasterpunkt eingefärbt. In den Spalten a2,b3,a3,b3, a4,b4 wird nur jeweils ein Rasterpunkt eingefärbt, so daß der von links oben nach rechts unten verlaufende Zeichenteil ganz verschwindet (Figur 2).

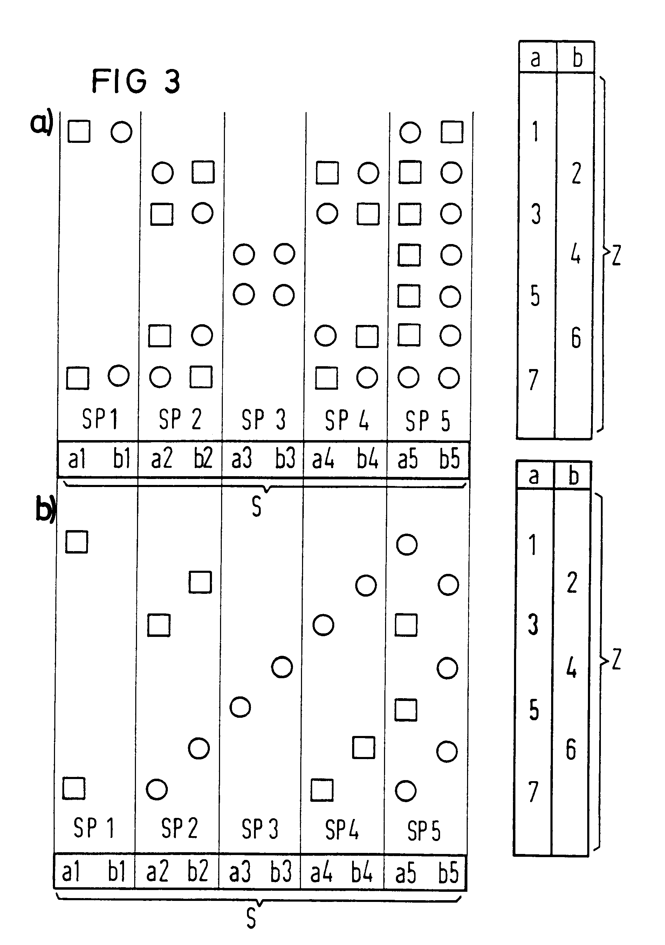

Nach Figur 3a werden die Spalten S des Rasters paarweise nebeneinanderliegend zusammengefaßt. Es entstehen die Spaltenpaare SP1 bis SP5 bei einer Spaltenanzahl 10. Vor der gewünschten Rasterausdünnung wird zur Bildung des Zeichens das Raster mit Rasterpunkten so aufgefüllt (im Speicher einer zugehörenden Steuereinheit), daß jedem zur ursprünglichen Bildung des Zeichens vorgesehenen Rasterpunkt in einer Zeile Z ein zusätzlicher Rasterpunkt zugesetzt wird, wenn noch ein Rasterpunkt in dieser Zeile Z innerhalb des zugehörigen Spaltenpaares SP1- SP5 unbelegt ist. Der zusätzliche Rasterpunkt kann also vor oder nach dem ursprünglichen Rasterpunkt angeordnet werden oder auch entfallen, wenn beide Rasterpunkte in einer Zeile innerhalb eines Spaltenpaares belegt sind.

Ein Beispiel für die Vorbelegung wäre in Figur 3a der Rasterpunkt a2 in Zeile 6, ein Beispiel für die Nachbelegung wäre in der gleichen Figur der Rasterpunkt b2 in Zeile 7 und ein Beispiel für das Entfallen eines zusätzlichen Rasterpunktes wären in der gleichen Figur die Rasterpunkte a3/b3 in Zeile 5 oder a3/b3 in Zeile 4 (Spaltenpaar SP3).

Nach der Ergänzung der Rasterpunkte erfolgt in bekannter Weise die Ausdünnung nach dem schachbrettartigen Verfahren und es ergibt sich die Zeichenbildung nach Figur 3b. Es ergeben sich ausreichend viele und gut verteilte Rasterpunkte, um das Zeichen zu erkennen. Dieses Verfahren ist vor allem vom Rechenaufwand aus betrachtet sehr einfach, da immer nur ermittelt werden muß, ob innerhalb einer Zeile innerhalb eines Spaltenpaares ein Rasterpunkt fehlt. Eine eventuell unruhige Wiedergabe von dünnen Linien kann durch eine relativ hohe Auflösung kompensiert werden.

## Patentansprüche

1. Verfahren zum Ansteuern von Druckelementen, die als Tintentröpfchen ausstoßende Tintendruckeinrichtungen ausgebildet sind, welche in mehreren Reihen mit jeweils einer Mehrzahl von Druckelementen angeordnet sind und die zur Darstellung eines Zeichens an bestimmten Rasterpunkten innerhalb eines in Matrixform ausgebildeten Rasters Punkte erzeugen, wobei die Erzeugung der Punkte innerhalb der Matrix spaltenweise parallel zueinander erfolgt und wobei bei der Darstellung bestimmter Zeichen und Zeichengruppen eine Ausdünnung der notwendigen Rasterpunkte erfolgt, indem in jeder Spalte des Rasters jeder zweite druckbare Rasterpunkt unterdrückt wird und wobei die unterdrückten Rasterpunkte in der jeweils benachbarten Spalte um einen Rasterpunkt gegeneinander verschoben sind,
**dadurch gekennzeichnet**,
daß die Spalten (S) des Rasters immer paarweise (SP1-SP5) nebeneinanderliegend betrachtet werden und daß vor der Ausdünnung der Rasterpunkte des Rasters einem ursprünglich zur Bildung des Zeichens vorgesehenen Rasterpunkt je nach der Position dieses Rasterpunktes innerhalb des betrachteten Paares zusätzlich ein Rasterpunkt in derselben Zeile (Z) vorgesetzt oder nachgesetzt wird, falls noch nicht beide Rasterpunkte eines derartigen Spaltenpaares belegt sind, so daß beide zu einem Spaltenpaar (SP1-SP5) gehörende Rasterpunkte in einer Zeile (Z) belegt sind, und daß erst dann die genannte Ausdünnung vorgenommen wird.

## Claims

1. A method for the control of printing elements, which are constructed as ink printing devices ejecting ink droplets, which are arranged in a plurality of rows with in each case a plurality of printing elements and which, in order to represent a character, produce dots at particular screen dots within a screen which is constructed in matrix form, in which the production of the dots within the matrix takes place by column parallel to each other and in which, in the representation of particular characters and character groups, a thinning out of the necessary screen points takes place, in which in each column of the screen every other printable screen dot is suppressed, and in which the suppressed screen dots in the respectively adjacent column are displaced with respect to each other by one screen dot,
characterised in that
the columns (S) of the screen are always observed lying adjacent to each other in pairs (SP1-SP5) and that before the thinning out of the screen dots of the screen, there is arranged before or after a screen dot, originally provided for the formation of the character, depending on the position of this screen dot within the observed pair, in addition a screen dot in the same line (Z), if the two screen dots of such a column pair are not yet covered, so that both screen dots belonging to a column pair (SP1-SP5) in one line (Z) are covered, and that only then is the said thinning out undertaken.

## Revendications

1. Procédé pour l'amorçage d'éléments d'impression, qui sont réalisés en tant que dispositifs d'impression à encre éjectant des gouttes d'encre, lesquels sont agencés en plusieurs rangées, avec, à chaque fois, une multitude d'éléments d'impression et qui, pour la représentation d'un signe, engendrent des points en des points de trame déterminés à l'intérieur d'un réseau réalisé en forme de matrice, la génération des points à l'intérieur de la matrice s'effectuant par colonnes parallèles et, pour la représentation de signes et de groupes de signes déterminés, une réduction des points de trame nécessaires étant effectuée, en ce que, dans chaque colonne du réseau, chaque second point de trame pouvant être imprimé est retiré et, dans chacune des colonnes voisines, les points de trame retirés étant déplacés les uns par rapport aux autres d'un point de trame,
caractérisé en ce que les colonnes (S) du réseau sont toujours considérées par paires de colonnes voisines (SP1-SP5) et en ce que, avant la réduction des points de trame du réseau, pour un point de trame prévu initialement pour la formation du signe, en fonction de la position de ce point de trame à l'intérieur de la paire considérée, un point de trame supplémentaire est introduit avant ou après dans la même ligne (Z), dans le cas où les deux points de trame d'une telle paire de colonnes ne sont pas encore occupés, de sorte que dans une ligne (Z) les deux points de trame faisant partie d'une paire de colonnes (SP1-SP5) sont occupés et en ce que seulement alors la réduction citée est effectuée.
